(19) Europäisches Patentamt / European Patent Office / Office européen des brevets

(11) **EP 3 870 482 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(21) Anmeldenummer: **19730661.6**

(22) Anmeldetag: **05.06.2019**

(51) Internationale Patentklassifikation (IPC):
**B60R 13/08** *(2006.01)* **B62D 37/02** *(2006.01)*
**G10K 11/178** *(2006.01)*

(52) Gemeinsame Patentklassifikation (CPC):
**B60R 13/0861; B60R 13/0884; B62D 25/18;
B62D 35/02; G10K 11/16; G10K 11/162;
G10K 11/17823; G10K 11/17861;**
G10K 2210/12821; G10K 2210/3216;
G10K 2210/3224; G10K 2210/509; Y02T 10/88

(86) Internationale Anmeldenummer:
**PCT/AT2019/060185**

(87) Internationale Veröffentlichungsnummer:
**WO 2020/082098 (30.04.2020 Gazette 2020/18)**

(54) **VORRICHTUNG ZUR REDUZIERUNG EINES ABROLLGERÄUSCHS**

DEVICE FOR REDUCING TYRE NOISE

DISPSITIF DE REDUCTION D'UN BRUIT DE ROULEMENT

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.10.2018 AT 601912018**

(43) Veröffentlichungstag der Anmeldung:
**01.09.2021 Patentblatt 2021/35**

(73) Patentinhaber: **WYREMBA, Christian
8047 Graz (AT)**

(72) Erfinder: **WYREMBA, Christian
8047 Graz (AT)**

(74) Vertreter: **Röggla, Harald
Schwarz & Partner
Patentanwälte
Wipplingerstraße 30
1010 Wien (AT)**

(56) Entgegenhaltungen:
**EP-A1- 0 680 866 DE-A1- 19 729 804
JP-A- 2017 105 374**

**Beschreibung**

Vorrichtung zur Reduzierung eines Abrollgeräuschs eines, zumindest einen Reifen aufweisenden Fahrzeugs, wobei der Reifen auf einem Reifenlatsch auf einer Fahrbahn abrollt.

Im Bereich der Fahrzeugherstellung besteht ein stetiges Bedürfnis Fahrzeuge geräuscharmer zu gestalten, um immer restriktivere Zulassungsvorschriften in Bezug auf die Lärmemission von Fahrzeugen zu erfüllen und im Allgemeinen die Lärmbelastung der Umwelt durch Verkehr zu verringern. Zur Erfüllung dieser Zielsetzungen wurden in den letzten Jahren eine Reihe von Technologien entwickelt, welche beispielsweise darauf abzielen das Motorgeräusch eines Verbrennungsmotors zu dämpfen, die Schalldämpfung von Lärmschutzwänden zu verbessern, geräuscharme Asphaltmischungen zu entwickeln, oder die Schallemissionen aus dem Auspuff zu verringern. Durch die Erfolge, welche auf diesen Gebieten erzielt wurden, übertrifft mittlerweile, insbesondere in höheren Geschwindigkeitsbereichen, das Abrollgeräusch der Reifen eines Fahrzeugs die sonstigen bei der Fahrt auftretenden Geräuschquellen. Hierdurch ist es notwendig, beispielsweise auf Autobahnen Lärmschutzwände zu errichten. Im Fall von Schienenfahrzeugen ist das Abrollgeräusch der Reifen insbesondere störend, da dieses durch die Reibung eines metallischen Reifens auf einer metallischen Schiene entsteht und somit in einem sehr hohen Frequenzbereich auftritt und eine hohe Schalleistung aufweist.

Das Abrollgeräusch entsteht an einem Reifenlatsch, an welchem der Reifen auf der Fahrbahn aufliegt beziehungsweise rollt, und von welchem sich das Abrollgeräusch entlang einer Schallausbreitungsrichtung ausbreitet. Im Stand der Technik sind verschiedene Methoden bekannt, um das Abrollgeräusch zu reduzieren. Es sind für Kraftfahrzeuge beispielsweise Reifen bekannt, welche durch ihr Profildesign ein besonders geringes Abrollgeräusch aufweisen. Derartige Reifen bringen jedoch den Nachteil mit sich, dass diese speziellen Profile in der Regel einen negativen Einfluss auf die Haftung der Reifen aufweisen und somit die Fahrsicherheit verringern.

EP 0 680 866 A1 offenbart ein Fahrzeug mit zumindest einem Reifen und mit einer Vorrichtung zur Reduzierung eines Abrollgeräuschs des zumindest einen Reifens gemäß dem Oberbegriff des Anspruchs 1.

Die europäische Patentanmeldung EP 0 769 421 A1 offenbart eine Vorrichtung zur Verminderung des Reifen/Fahrbahngeräusches. Die Vorrichtung umfasst an einem oder beiden zur Fahrbahnfläche weisenden Enden eines Radgehäuses eine flexible Schürze aus elastischem, gummiartigem Werkstoff mit zum Straßenbelag hin offenen Hohlräumen.

Es ist die Aufgabe der vorliegenden Erfindung eine Vorrichtung zur Reduzierung eines Abrollgeräuschs zu bilden, welche im Vergleich zum Stand der Technik eine verbesserte Reduktion des Abrollgeräuschs aufweist.

Erfindungsgemäß wird die vorliegende Aufgabe dadurch gelöst, dass die Vorrichtung zumindest ein, in Fahrtrichtung des Fahrzeugs vor und/ oder hinter dem Reifenlatsch an dem Fahrzeug befestigtes Schallabsorptionselement mit einer Resonanzfrequenz und einer, dem Reifenlatsch zugewandten, gekrümmten ersten Absorbermembran umfasst, wobei im Wesentlichen die gesamte erste Absorbermembran normal auf eine von dem Reifenlatsch ausgehende Schallausbreitungsrichtung orientiert ist, und das Schallabsorptionselement einen Abstand von dem Reifenlatsch aufweist, welcher einem Vielfachen einer halben, der Resonanzfrequenz zugeordneten, Wellenlänge entspricht.

Die erfindungsgemäße Vorrichtung zur Reduzierung eines Abrollgeräuschs eines, zumindest einen Reifen aufweisenden Fahrzeugs umfasst zumindest ein, in Fahrtrichtung des Fahrzeugs vor, hinter und/ oder seitlich des Reifenlatschs an dem Fahrzeug befestigtes Schallabsorptionselement. Das Schallabsorptionselement weist zumindest eine Resonanzfrequenz auf, welche vorzugsweise in Bezug auf den zu dämpfenden Frequenzbereich des Abrollgeräuschs ausgewählt ist. Des Weiteren weist das Schallabsorptionselement eine gekrümmte erste Absorbermembran auf. Im Wesentlichen die gesamte erste Absorbermembran ist Normal auf eine von dem Reifenlatsch ausgehende Schallausbreitungsrichtung orientiert. Das Schallabsorptionselement weist einen Abstand von dem Reifenlatsch auf, welche einem Vielfachen einer halben, der Resonanzfrequenz zugeordneten, Wellenlänge entspricht. Durch die erfindungsgemäße Kombination der normalen Orientierung im Wesentlichen der gesamten ersten Absorbermembran auf die von dem Reifenlatsch ausgehende Schallausbreitungsrichtung, sowie der Anordnung des Schallabsorptionselements in einem Abstand von dem Reifenlatsch, welcher einem Vielfachen einer halben, der Resonanzfrequenz zugeordneten, Wellenlänge entspricht, wird der Vorteil erreicht, dass eine besonders effektive Schalldämpfung bereitgestellt wird.

Vorzugsweise umfasst das Schallabsorptionselement zumindest eine, von der ersten Absorbermembran beabstandet angeordnete weitere Absorbermembran, wobei die weitere Absorbermembran im Wesentlichen parallel zu der ersten Absorbermembran angeordnet ist. Hierdurch wird der Vorteil erreicht, dass die Resonanzfrequenz des Schallabsorptionselements auf den zu dämpfenden Frequenzbereich des Abrollgeräuschs abgestimmt werden kann.

Gemäß einer bevorzugten Ausführungsform der erfindungsgemäßen Vorrichtung ist ein durch zwei aufeinanderfolgende Absorbermembranen bestimmter Raum des Schallabsorptionselements luftdicht abgeschlossen, und vorzugsweise mit Akustikschaumstoff befüllt. Hierdurch wird der Vorteil erreicht, dass die Dämpfungseffizienz des Schallabsorptionselements verbessert wird.

Bevorzugt ist des Weiteren, dass ein Abstand zwischen der ersten Absorbermembran und der zu der ersten Absorbermembran benachbarten weiteren Absorbermembran von einem Abstand zwischen zwei weiteren Absorbermembranen abweicht. Hierdurch können die Abstände der einzelnen Absorbermembranen zueinander derart gewählt werden, dass ein weiterer Frequenzbereich des Abrollgeräuschs gedämpft wird. Zusätzlich wird hierdurch die Abstimmung der Resonanzfrequenz des Schallabsorptionselements erleichtert.

Zur Abstimmung der Resonanzfrequenz des Schallabsorptionselements weisen die Absorbermembranen zudem vorzugsweise variierende Flächengewichte auf. Durch die Kombination von variierenden Flächengewichten der Absorbermembranen sowie den unterschiedlichen Abständen zwischen den Absorbermembranen wird der Vorteil erreicht, dass eine Abstimmung des Schallabsorptionselements in einem breiten Frequenzbereich ermöglicht wird.

Gemäß der bevorzugten Ausführungsform der erfindungsgemäßen Vorrichtung umfasst die Vorrichtung einen, mit einem Signalprozessor verbundenen Körperschallwandler und ein mit dem Signalprozessor verbundenes Mikrophon, wobei das Mikrophon vorzugsweise im Bereich eines der Fahrbahn zugewandten Endes des Schallabsorptionselements angeordnet ist. Des Weiteren ist der Signalprozessor vorzugsweise dazu ausgebildet, ein von dem Mikrophon empfangenes Audiosignal zur Erzeugung einer destruktiven Schallinterferenz phasenverschoben an den Körperschallwandler bereitzustellen. Hierdurch wird der Vorteil erreicht, dass durch die erfindungsgemäße Vorrichtung eine aktive Unterdrückung des Abrollgeräusches bereitgestellt wird. Durch die Anordnung des Mikrophons im Bereich eines der Fahrbahn zugewandten Endes des Schallabsorptionselements wird eine optimale Aufnahme des Abrollgeräuschs gewährleistet.

Der Körperschallwandler ist in der bevorzugten Ausführungsform an einer, dem Reifenlatsch abgewandten Seite der ersten Absorbermembran angeordnet. Hierdurch wird der Vorteil erreicht, dass die erste Absorbermembran gleichzeitig als schallerzeugende Membran eingesetzt wird, wodurch auf eine gesonderte Lautsprechermembran verzichtet werden kann.

Gemäß einer alternativen Ausführungsvariante ist der Körperschallwandler an einem Karosserieteil des Fahrzeugs im Bereich des Reifens angeordnet. Hierdurch wird der Vorteil erreicht, dass der Körperschallwandler in einem geschützten Bereich innerhalb des Fahrzeugs angeordnet ist.

Um eine optimale Schallabsorption durch das Schallabsorptionselement bei höheren Fahrtgeschwindigkeiten zu gewährleisten ist in einer vorteilhaften Ausführungsvariante der erfindungsgemäßen Vorrichtung das Schallabsorptionselement in Richtung der Fahrbahn verschiebbar an dem Fahrzeug befestigt und weist ein Aerodynamikelement auf, welches dazu ausgebildet ist, eine fahrtwindabhängige Abtriebskraft bereitzustellen.

Vorzugsweise umfasst die Vorrichtung eine mit dem Schallabsorptionselement verbundene Positionierungseinheit, wobei die Positionierungseinheit dazu ausgebildet ist, das Schallabsorptionselement bei einer steigenden Fahrtgeschwindigkeit des Fahrzeugs in einer Betriebsposition, in welcher die erste Absorbermembran im Wesentlichen normal auf die von dem Reifenlatsch ausgehende Schallausbreitungsrichtung orientiert ist, zu positionieren, und bei sinkender Fahrtgeschwindigkeit, aus der Betriebsposition zu verlagern. Hierdurch wird der Vorteil erreicht, dass das Schallabsorptionselement bei niedrigen Fahrgeschwindigkeiten vor Beschädigungen geschützt am Fahrzeug untergebracht, und erst bei hohen Fahrtgeschwindigkeiten eingesetzt wird.

Die erste Absorbermembran ist gemäß der bevorzugten Ausführungsform aus Carbon und/oder Kevlar gebildet, und weist vorzugsweise einen Schaumstoffkern auf. Des Weiteren ist die weitere Absorbermembran vorzugsweise aus Carbon und/oder Kevlar gebildet, und weist vorzugsweise einen Schaumstoffkern auf. Diese Compositmaterialien sind vorteilhafterweise leicht, steif und beständig gegen raue physikalische Umgebungen.

Gemäß der bevorzugten Ausführungsform weist das Schallabsorptionselement mehrere Resonanzfrequenzen auf. Hierdurch wird der Vorteil erreicht, dass mehrere Frequenzbereiche mit der erfindungsgemäßen Vorrichtung gedämpft werden können.

Vorzugsweise weist das Schallabsorptionselement eine elastische Membranaufhängung auf, wobei jede Absorbermembran an der elastischen Membranaufhängung schwingfähig gelagert ist. Hierdurch wird der Vorteil erreicht, dass eine möglichst kolbenförmige Oszillation jeder Absorbermembran erreicht wird, wodurch eine verbesserte Schallabsorption gewährleistet wird.

Vorteilhafte Ausgestaltungen der erfindungsgemäßen Vorrichtung, sowie alternative Ausführungsvarianten werden in weiterer Folge anhand der Figuren näher erläutert.

Figur 1a zeigt eine erfindungsgemäße Vorrichtung zur Reduzierung eines Abrollgeräuschs mit zwei Schallabsorptionselementen.

Figur 1b und Figur 1c zeigen die Schallausbreitung und die Hornmündungsresonanzen zwischen einer Fahrbahn und einem Reifen in einer schematischen Darstellung.

Figur 1d zeigt die Schallverstärkung des Horneffekts an einem beispielhaften Reifen.

Figur 2a zeigt den schichtweisen Aufbau des Schallabsorptionselements der erfindungsgemäßen Vorrichtung.

Figur 2b zeigt den Schalldruckverlauf der Hornmündungsresonanzen am Beispiel eines 17" Reifens in Abhängigkeit vom Abstand zum Reifenlatsch.

Figur 3a zeigt das Schallabsorptionselement der erfindungsgemäßen Vorrichtung mit aktiver Geräuschunterdrückung in einer Schnittansicht.

Figur 3b zeigt die erfindungsgemäße Vorrichtung mit zwei Schallabsorptionselementen gemäß Figur 3a.

Figur 3c zeigt die erfindungsgemäße Vorrichtung mit zwei Schallabsorptionselementen mit aktiver Geräuschunterdrückung in einer alternativen Ausführungsvariante.

Figur 4 zeigt eine weitere Ausführungsvariante der erfindungsgemäßen Vorrichtung mit an den Schallabsorptionselementen angeordneten Aerodynamikelementen.

Figur 5 zeigt die erfindungsgemäße Vorrichtung mit einer Positionierungseinheit.

Figur 6 zeigt eine erste Absorbermembran beziehungsweise eine weitere Absorbermembran der erfindungsgemäßen Vorrichtung in einer Schnittdarstellung.

Figur 7 zeigt eine Ausführungsvariante der erfindungsgemäßen Vorrichtung mit 3-dimensional gekrümmtem Schallabsorptionselement

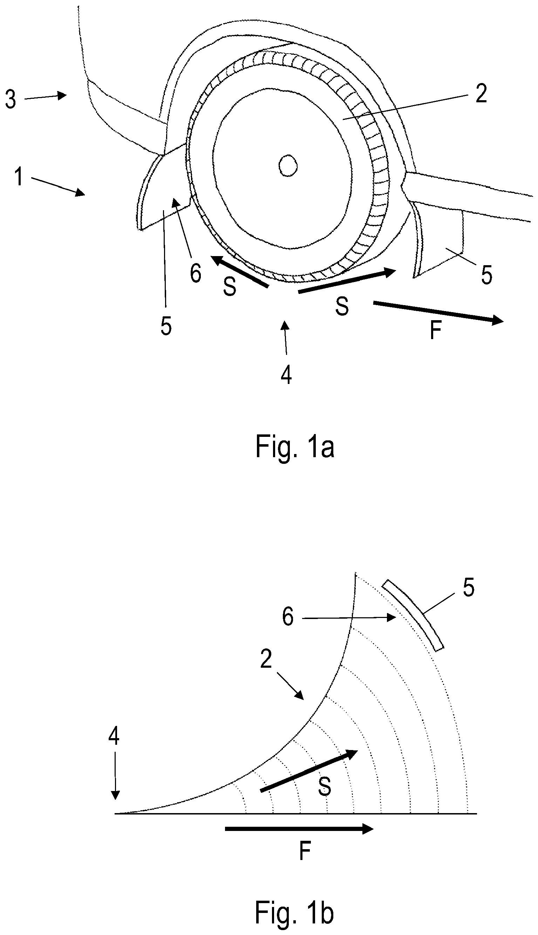

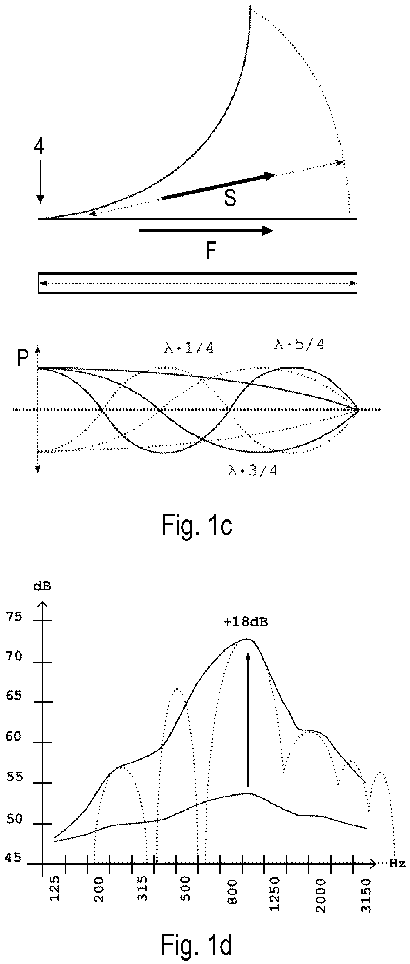

Figur 1a zeigt eine erfindungsgemäße Vorrichtung 1 zur Reduzierung eines Abrollgeräuschs eines, zumindest einen Reifen 2 aufweisenden Fahrzeugs 3. Die Vorrichtung 1 ist in Figur 1a im Bereich des Reifens 2 an dem Fahrzeug 3 installiert dargestellt. Der Reifen 2 rollt auf einem Reifenlatsch 4 auf einer Fahrbahn ab, welche in Figur 1a nicht gesondert dargestellt ist. Der Reifenlatsch 4 stellt die Kontaktfläche des Reifens 2 mit der Fahrbahn dar. Als Fahrzeug 3 ist jedes Fahrzeug 3 anzusehen, welches zumindest einen Reifen 2 aufweist, welcher auf einer Fahrbahn abrollt, wie beispielsweise Personenkraftfahrzeuge, Lastkraftfahrzeuge, einspurige Fahrzeuge, Schienenfahrzeuge, Busse, Straßenbahnen, U-Bahnen und dergleichen. Im Fall von Schienenfahrzeugen wird die Fahrbahn durch die Schiene gebildet. Im Fahrbetrieb entsteht durch das Abrollen des Reifens 2 auf der Fahrbahn ein Abrollgeräusch, welches vom Fahrzeuggewicht, der Fahrgeschwindigkeit, der Profilgestaltung des Reifens 2, der Reifenbreite, dem Reifendruck, dem Reifenmaterial, und anderen Einflussfaktoren abhängig ist. Die erfindungsgemäße Vorrichtung 1 umfasst ein, in Fahrtrichtung vor, hinter und/oder seitlich des Reifenlatschs 4 an dem Fahrzeug 3 befestigtes Schallabsorptionselement 5. In Figur 1a ist die Vorrichtung 1 in der bevorzugten Ausführungsform mit zwei Schallabsorptionselementen 5 dargestellt, wobei ein Schallabsorptionselement 5 in einer Fahrtrichtung F des Fahrzeugs 3 vor, und ein Schallabsorptionselement 5 in der Fahrtrichtung F hinter dem Reifenlatsch 4 angebracht ist. Das Schallabsorptionselement 5 weist zumindest eine Resonanzfrequenz auf. Gemäß einer bevorzugten Ausführungsvariante weist das Schallabsorptionselement 5 mehrere Resonanzfrequenzen auf. Die Resonanzfrequenzen sind durch die für das Schallabsorptionselement 5 verwendeten Materialen, und dessen internen Aufbau definiert. Das Schallabsorptionselement 5 weist eine, dem Reifenlatsch 4 zugewandte, gekrümmte erste Absorbermembran 6 auf. Figur 1b zeigt schematisch die Schallausbreitung zwischen der Fahrbahn und dem Reifen 2. Wie aus den Figuren 1b und 1c ersichtlich, ist im Wesentlichen die gesamte erste Absorbermembran 6 normal auf eine, von dem Reifenlatsch 4 ausgehende Schallausbreitungsrichtung S orientiert, wobei das Schallabsorptionselement 5 einen Abstand von dem Reifenlatsch 4 aufweist, welcher einem Vielfachen einer halben, der Resonanzfrequenz des Schallabsorptionselements 5, zugeordneten Wellenlänge λ entspricht. Das Schallabsorptionselement 5 ist derart orientiert, dass die Schallwellen aus dem Reifenlatsch 4 mit im Wesentlichen 90° auf die erste Absorbermembran 6 treffen.

Der Anmelder hat herausgefunden, dass der Reifenlatsch 4 nicht nur eine Schallquelle darstellt, sondern auch gleichzeitig einen schallharten Hornhals eines akustischen Horns. Wie aus Figur 1c ersichtlich treten zwischen dem Reifenlatsch 4 und dem Mündungsbereich des Horns, ähnlich wie bei einem einseitig geschlossenen Rohr, welches in der Mitte von Figur 1c zu Vergleichszwecken dargestellt ist, stehende Schallwellen auf. Hierbei tritt beim Hornhals immer ein Maximum des Schalldrucks P, und an der Hornmündung aufgrund des Impedanzwechsels ein Schalldruckminimum auf. Die Summen der stehenden Schallwellen ergeben, wie in Figur 1d beispielhaft dargestellt ist, einen für den Horneffekt eines Reifens 2 typischen Amplitudenverlauf, welcher im Beispiel von Figur 1d eine Verstärkung von +18 dB bei einer Frequenz von etwa 1000 Hz aufweist. In Bezug auf die Geometrie des Fahrzeugs 3 ergibt sich eine örtliche Fixierung des Reifenlatschs 4 bei einer Geradeausfahrt, wodurch die Schalldruckmaxima der stehenden Schallwellen immer in einer bestimmten Entfernung zum Reifenlatsch 4 und somit an einer exakt definierten Position in Bezug auf das Fahrzeug 3 auftreten. Eine Positionierung des Schallabsorptionselements 5 in einem Abstand von dem Reifenlatsch 4 welcher einem Vielfachen der halben, der Resonanzfrequenz des Schallabsorptionselements 5 zugeordneten, Wellenlänge λ entspricht in Verbindung mit der ersten Absorbermembran 6, welche im Wesentlichen an Ihrer gesamten Fläche normal auf die von dem Reifenlatsch 4 ausgehende Schallausbreitungsrichtung S orientiert ist ergibt somit eine im Vergleich zum Stand der Technik wesentlich effektivere Schallunterdrückung.

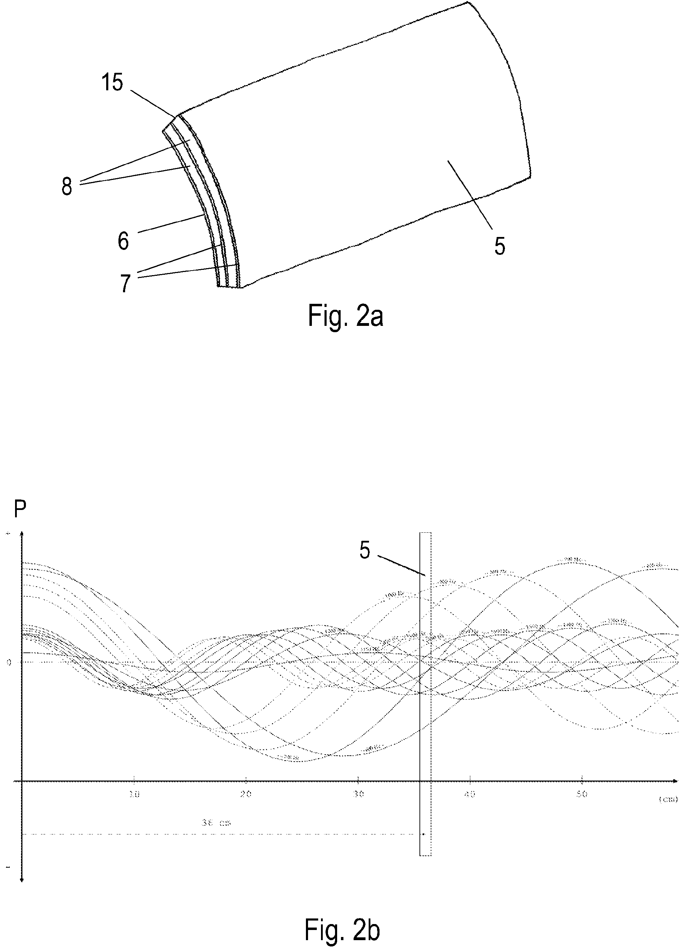

Das Schallabsorptionselement 5 ist vorzugsweise als Membranabsorber ausgebildet. Wie in Figur 2a dargestellt, umfasst das Schallabsorptionselement 5 gemäß der bevorzugten Ausführungsform der erfindungsgemäßen Vorrichtung 1 zumindest eine von der ersten Absorbermembran 6 beabstandet angeordnete weitere Absorbermembran 7, wobei das in Figur 2a dargestellte beispielhafte Schallabsorptionselement 5 zwei weitere Absorbermembranen 7 aufweist. Die weitere Absorbermembran 7 ist im Wesentlichen parallel zu der ersten Absorbermembran 6 angeordnet. Gemäß dieser Ausführungsform ist vorzugsweise ein durch zwei aufeinanderfolgende Absorbermembranen 6, 7 definierter Raum 8 des Schallabsorptionselements 5 luftdicht abgeschlossen, und vorzugsweise mit einem Akustikschaumstoff befüllt. Zudem weicht ein Abstand zwischen der ersten Absorbermembran 6 und der zu der ersten Absorbermembran 6 benachbarten weiteren Absorbermembran 7 von einem Abstand zwischen zwei weiteren Absorbermembranen 7 ab. Zudem weisen die Absorbermembranen 6, 7 vorzugsweise variierende Flächengewichte auf. Durch eine Variation der Abstände der einzelnen Absorbermembranen 6, 7 zueinander, der Flächengewichte der Absorbermembranen 6, 7, die Füllung der Räume 8 mit Akustikschaumstoff und die Anzahl der im Schallabsorptionselement 5 vorgesehenen Absorbermembranen 6, 7 wird der Vorteil erreicht, dass das Schallabsorptionselement 5 auf verschiedene Resonanzfrequenzen abgestimmt werden kann. Vorzugsweise umfasst das Schallabsorptionselement 5 zudem, wie in Figur 2a dargestellt, eine elastische Membranaufhängung 15, wobei jede Absorbermembran 6, 7 an der elastischen Membranaufhängung 15 schwingfähig gelagert ist. Diese elastische Membranaufhängung 15 ist von Bedeutung, da eine im Bereich der Reifen 2 starr montierte Absorbermembran 6, 7 ein gänzlich anderes Schwingungsverhalten der Absorbermembran 6, 7 zur Folge, und nur durch ihre Verformbarkeit in der Absorbermembranmitte eine Wirkung hätte. Das Ziel der elastischen Membranaufhängung 15 ist es ähnlich wie bei einer Lautsprechersicke eine möglichst kolbenförmige Oszillation einer starren Membran bzw. Platte zu ermöglichen.

Die Resonanzfrequenz eines Plattenabsorbers ergibt sich im Allgemeinen durch:

$$f_R = \frac{600}{\sqrt{d \cdot m}}$$

f_R  Resonanzfrequenz
d    Abstand zwischen zwei aufeinanderfolgenden Absorbermembranen 6, 7
m    Flächengewicht der Absorbermembranen

Figur 2b zeigt schematisch den Schalldruckverlauf der Hornmündungsresonanzen in Abhängigkeit vom Abstand zum Reifenlatsch 4 eines beispielhaften Reifens 2, welcher in Bezug auf Amplitudenspitzen analysiert wurde. Zur Bereitstellung einer optimalen Schallunterdrückung ist es vorteilhaft an Positionen, an welchen Maxima des Schalldrucks P von zu absorbierenden Frequenzen zusammenfallen das Schallabsorptionselement 5 zu positionieren und dessen Resonanzfrequenzen auf die zu absorbierenden Frequenzen abzustimmen. In den in Figur 2b dargestellten Schalldruckverläufen der Hornmündungsresonanzen befinden sich beispielsweise bei einem Abstand von ca. 36 cm die Schalldruckmaxima der Frequenzen 950 Hz und 1900 Hz. Auf diese Weise kann eine mehrfach schmalbandige Absorption des Abrollgeräusches mit einem aus mehreren Absorbermembranen 6, 7 bestehenden Absorberelement erreicht werden.

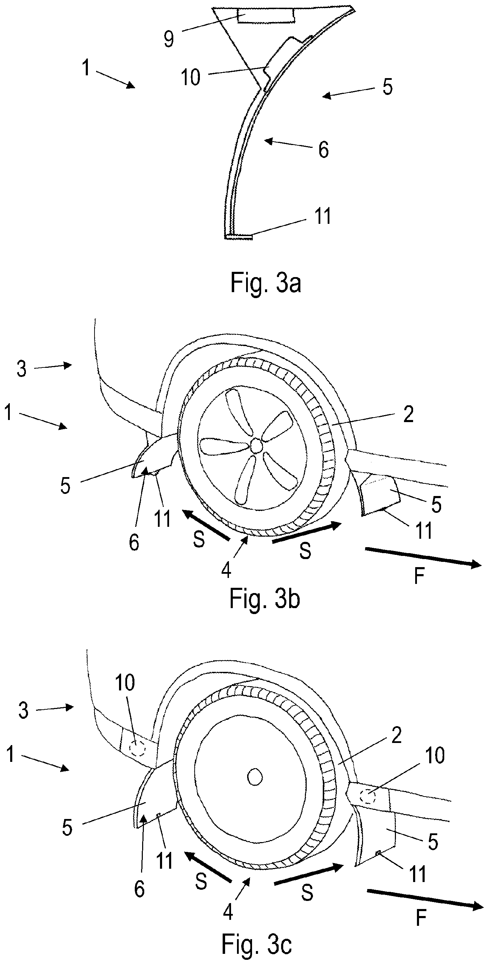

Figur 3a zeigt die erfindungsgemäße Vorrichtung 1 in einer alternativen Ausführungsvariante mit aktiver Geräuschunterdrückung, wobei die in Figur 3a dargestellte Vorrichtung 1 einen mit einem Signalprozessor 9 verbundenen Körperschallwandler 10 und ein mit dem Signalprozessor 9 verbundenes Mikrophon 11

umfasst. Das Mikrophon 11 ist vorzugsweise im Bereich eines, der Fahrbahn zugewandten Endes des Schallabsorptionselements 5 angeordnet. Figur 3b zeigt die erfindungsgemäße Vorrichtung 1 gemäß Figur 3a mit zwei Schallabsorptionselementen 5, angebracht an einem Fahrzeug 3. Hierdurch wird der Vorteil erreicht, dass das Mikrophon 11 weniger durch Motorgeräusche beeinflusst wird. Der Signalprozessor 9 verarbeitet ein von dem Mikrophon 11 empfangenes Audiosignal und stellt dieses phasenverschoben an den Körperschallwandler 10 bereit. Hierdurch wird eine destruktive Schallinterferenz zwischen dem Abrollgeräusch und dem von dem Körperschallwandler 10 ausgegebenen phasenverschobenen Audiosignal erzeugt. Dies führt zu einer umfangreichen Reduktion der Schallleistung des Abrollgeräuschs.

Vorzugsweise ist der Körperschallwandler 10, wie in Figur 3a dargestellt, an einer dem Reifenlatsch 4 abgewandten Seite der ersten Absorbermembran 6 angeordnet. Hierdurch ist der Körperschallwandler 10 von Beschädigungen geschützt innerhalb des Schallabsorptionselements 5 angeordnet. Zudem wird hierbei die erste Absorbermembran 6 gleichzeitig als schallerzeugende Membran herangezogen.

Figur 3c zeigt eine weitere Ausführungsvariante der erfindungsgemäßen Vorrichtung 1 mit zwei Schallabsorptionselementen 5, welche eine aktive Geräuschunterdrückung bereitstellt. Der Körperschallwandler 10 ist in dieser Ausführungsvariante an einem Karosserieteil des Fahrzeugs 3 im Bereich des Reifens 2 angeordnet. Hierdurch ist der Körperschallwandler 10 von Beschädigungen geschützt innerhalb des Fahrzeugs 3 angeordnet. Zudem wird hierbei die Karosserie des Fahrzeugs 3 als schallerzeugende Membran herangezogen.

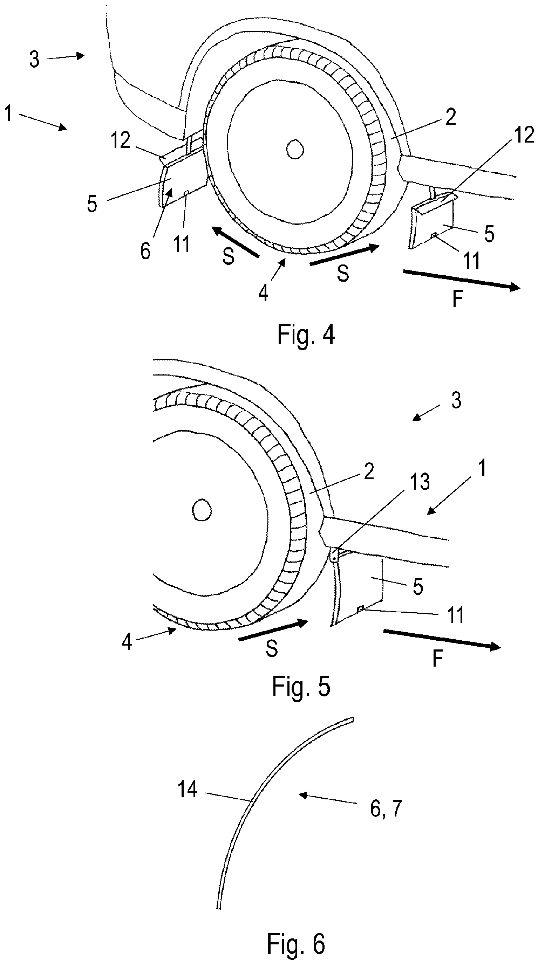

Figur 4 zeigt eine weitere Ausführungsvariante der erfindungsgemäßen Vorrichtung 1 mit zwei Schallabsorptionselementen 5, wobei jedes der zwei Schallabsorptionselemente 5 in Richtung der Fahrbahn verschiebbar an dem Fahrzeug 3 befestigt ist. Zudem weist eines der beiden, oder wie in Figur 4 gezeigt beide Schallabsorptionselemente 5 jeweils ein Aerodynamikelement 12 auf, welches dazu ausgebildet ist, eine fahrtwindabhängige Abtriebskraft bereitzustellen. Das Aerodynamikelement 12 wirkt als aus dem Fahrzeugbau allgemein bekannter Spoiler, welcher eine Verlagerung des Schallabsorptionselements 5 während der Fahrt erreicht. Hierdurch wird der Vorteil erreicht, dass das Schallabsorptionselement 5 während der Fahrt näher zur Fahrbahn gebracht werden kann, wodurch Schallreflektionen von der Fahrbahn verringert werden. Die in Figur 4 dargestellte Ausführungsvariante der erfindungsgemäßen Vorrichtung 1 kann zusätzlich eine aktive Geräuschunterdrückung umfassen, welche in Bezug Figur 3a Figur 3b und Figur 3c erläutert wurde.

Figur 5 zeigt die erfindungsgemäße Vorrichtung 1 in einer weiteren Ausführungsvariante mit einer mit dem Schallabsorptionselement 5 verbundenen Positionierungseinheit 13. Die Positionierungseinheit 13 positioniert das Schallabsorptionselement 5 bei einer steigenden Fahrtgeschwindigkeit des Fahrzeugs 3 in einer in Figur 5 dargestellten Betriebsposition, in welcher die erste Absorbermembran 6 im Wesentlichen normal auf die von dem Reifenlatsch 4 ausgehende Schallausbreitungsrichtung S orientiert ist. Bei sinkender Fahrtgeschwindigkeit verlagert die Positionierungseinheit 13 das Schallabsorptionselement 5 aus der Betriebsposition. Hierdurch wird der Vorteil erreicht, dass das Schallabsorptionselement 5 bei niedrigen Fahrgeschwindigkeiten vor Beschädigungen geschützt am Fahrzeug 3 untergebracht, und erst bei hohen Fahrtgeschwindigkeiten eingesetzt wird. Die in Figur 5 beispielhaft dargestellte Positionierungseinheit 13 umfasst ein Schwenklager zum verschwenken des Schallabsorptionselements 5 aus der Betriebsposition.

In Figur 6 ist die erste Absorbermembran 6 beziehungsweise die weitere Absorbermembran 7 dargestellt. Vorzugsweise ist die erste Absorbermembran 6 gemäß der bevorzugten Ausführungsform aus Carbon und/oder Kevlar gebildet, und weist vorzugsweise einen Schaumstoffkern 14 auf. Des Weiteren ist die weitere Absorbermembran vorzugsweise aus Carbon und/oder Kevlar gebildet, und weist vorzugsweise einen Schaumstoffkern 14 auf. Diese Compositmaterialien sind vorteilhafterweise leicht, steif und beständig gegen raue physikalische Umgebungen.

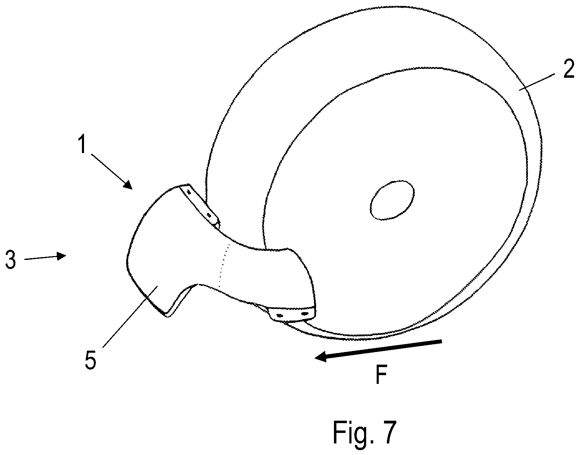

Figur 7 zeigt eine Ausführungsvariante der erfindungsgemäßen Vorrichtung 1 mit einem gekrümmten Schallabsorptionselement 5, welches im Bereich des Reifens 2 in Fahrtrichtung F vor und zum Teil seitlich des Reifens 2 angeordnet ist. Das Schallabsorptionselement 5 kann gemäß einer weiteren Ausführungsvariante, den Reifen 2 auch halbkreisförmig umfassen, und somit vor, hinter und seitlich von dem Reifenlatsch 4 angeordnet sein.

**Patentansprüche**

1. Fahrzeug (3) mit zumindest einem Reifen (2) und mit einer Vorrichtung (1) zur Reduzierung eines Abrollgeräuschs des zumindest einen Reifens (2), wobei der Reifen (2) auf einem Reifenlatsch (4) auf einer Fahrbahn abrollt, wobei die Vorrichtung (1) zumindest ein, in Fahrtrichtung (F) des Fahrzeugs (3) vor, hinter und/oder seitlich des Reifenlatschs (4) an dem Fahrzeug (3) befestigtes Schallabsorptionselement (5) mit zumindest einer Resonanzfrequenz und einer, dem Reifenlatsch (4) zugewandten, gekrümmten ersten Absorbermembran (6) umfasst, **dadurch gekennzeichnet, dass** im Wesentlichen die gesamte erste Absorbermembran (6) normal auf eine von dem Reifenlatsch (4) ausgehende Schallausbreitungsrichtung (S) orientiert ist, und das Schallabsorptionselement (5) einen Abstand von dem Reifenlatsch (4) aufweist, welcher einem Vielfachen einer halben, der Resonanzfrequenz zugeordneten, Wellenlänge ($\lambda$) entspricht.

2. Fahrzeug (3) gemäß Anspruch 1, **dadurch gekennzeichnet, dass** das Schallabsorptionselement (5) zumindest eine von der ersten Absorbermembran (6) beabstandet angeordnete weitere Absorbermembran (7) umfasst, wobei die weitere Absorbermembran (7) im Wesentlichen parallel zu der ersten Absorbermembran (6) angeordnet ist.

3. Fahrzeug (3) gemäß Anspruch 2, **dadurch gekennzeichnet, dass** ein durch zwei aufeinanderfolgende Absorbermembranen (6, 7) definierter Raum (8) des Schallabsorptionselements (5) luftdicht abgeschlossen, und vorzugsweise mit einem Akustikschaumstoff befüllt ist.

4. Fahrzeug (3) gemäß einem der Ansprüche 2 oder 3, **dadurch gekennzeichnet, dass** ein Abstand zwischen der ersten Absorbermembran (6) und der zu der ersten Absorbermembran (6) benachbarten weiteren Absorbermembran (7) von einem Abstand zwischen zwei weiteren Absorbermembranen (7) abweicht.

5. Fahrzeug (3) gemäß einem der Ansprüche 2 bis 4, **dadurch gekennzeichnet, dass** die Absorbermembranen (6, 7) variierende Flächengewichte aufweisen.

6. Fahrzeug (3) gemäß einem der Ansprüche 1 bis 5, **dadurch gekennzeichnet, dass** die Vorrichtung (1) einen, mit einem Signalprozessor (9) verbundenen Körperschallwandler (10) und ein mit dem Signalprozessor (9) verbundenes Mikrophon (11) umfasst, wobei das Mikrophon (11) vorzugsweise im Bereich eines der Fahrbahn zugewandten Endes des Schallabsorptionselements (5) angeordnet ist.

7. Fahrzeug (3) gemäß Anspruch 6, **dadurch gekennzeichnet, dass** der Signalprozessor (9) dazu ausgebildet ist, ein von dem Mikrophon (11) empfangenes Audiosignal zur Erzeugung einer destruktiven Schallinterferenz phasenverschoben an den Körperschallwandler (10) bereitzustellen.

8. Fahrzeug (3) gemäß einem der Ansprüche 6 oder 7, **dadurch gekennzeichnet, dass** der Körperschallwandler (10) an einer, dem Reifenlatsch (4) abgewandten Seite der ersten Absorbermembran (6) angeordnet ist.

9. Fahrzeug (3) gemäß einem der Ansprüche 6 oder 7, **dadurch gekennzeichnet, dass** der Körperschallwandler (10) an einem Karosserieteil des Fahrzeugs (3) im Bereich des Reifens (2) angeordnet ist.

10. Fahrzeug (3) gemäß einem der Ansprüche 1 bis 9, **dadurch gekennzeichnet, dass** das Schallabsorptionselement (5) in Richtung der Fahrbahn verschiebbar an dem Fahrzeug (3) befestigt ist und ein Aerodynamikelement (12) aufweist, welches dazu ausgebildet ist, eine fahrtwindabhängige Abtriebskraft bereitzustellen.

11. Fahrzeug (3) gemäß einem der Ansprüche 1 bis 10, **dadurch gekennzeichnet, dass** die Vorrichtung (1) eine mit dem Schallabsorptionselement (5) verbundene Positionierungseinheit (13) umfasst, wobei die Positionierungseinheit (13) dazu ausgebildet ist, das Schallabsorptionselement (5) bei einer steigenden Fahrtgeschwindigkeit des Fahrzeugs (3) in einer Betriebsposition, in welcher die erste Absorbermembran (6) im Wesentlichen normal auf die von dem Reifenlatsch (4) ausgehende Schallausbreitungsrichtung orientiert ist, zu positionieren, und bei sinkender Fahrtgeschwindigkeit, aus der Betriebsposition zu verlagern.

12. Fahrzeug (3) gemäß einem der Ansprüche 1 bis 11, **dadurch gekennzeichnet, dass** die erste Absorbermembran (6) aus Carbon und/oder Kevlar gebildet ist, und vorzugsweise einen Schaumstoffkern (14) aufweist.

13. Fahrzeug (3) gemäß Anspruch 2, **dadurch gekennzeichnet, dass** die weitere Absorbermembran (7) aus Carbon und/oder Kevlar gebildet ist, und vorzugsweise einen Schaumstoffkern (14) aufweist.

14. Fahrzeug (3) gemäß einem der Ansprüche 1 bis 13, **dadurch gekennzeichnet, dass** das Schallabsorptionselement (5) mehrere Resonanzfrequenzen aufweist.

15. Fahrzeug (3) gemäß einem der Ansprüche 1 bis 14, **dadurch gekennzeichnet, dass** das Schallabsorptionselement (5) eine elastische Membranaufhängung (15) aufweist, wobei jede Absorbermembran (6, 7) an der elastischen Membranaufhängung (15) schwingfähig gelagert ist.

**Claims**

1. A vehicle (3) comprising at least one tire (2) and comprising a device (1) for reducing a rolling noise of the at least one tire (2), the tire (2) rolling on a roadway on a tire contact patch (4), wherein the device (1) comprises at least one sound absorption element (5) attached to the vehicle (3) in front of, behind and/or laterally of the tire contact patch (4) in the direction of travel (F) of the vehicle (3) and having at least one resonance frequency and a curved first absorber membrane (6) facing the tire contact patch (4), **characterized in that** essentially the entire first absorber membrane (6) is oriented normally to a direction of sound propagation (S) emanating from the tire contact patch (4), and the sound absorption element (5) is located at a distance from the tire contact patch (4) which corresponds to a multiple of half a wavelength ($\lambda$) assigned to the resonance frequency.

2. A vehicle (3) according to claim 1, **characterized in that** the sound absorption element (5) comprises at least one further absorber membrane (7) arranged at a distance from the first absorber membrane (6), the further absorber membrane (7) being arranged essentially in parallel to the first absorber membrane (6).

3. A vehicle (3) according to claim 2, **characterized in that** a space (8) of the sound absorption element (5), which is defined by two consecutive absorber membranes (6, 7), is hermetically sealed and preferably filled with acoustic foam.

4. A vehicle (3) according to any of claims 2 or 3, **characterized in that** a distance between the first absorber membrane (6) and the further absorber membrane (7) adjacent to the first absorber membrane (6) deviates from a distance between two further absorber membranes (7).

5. A vehicle (3) according to any of claims 2 to 4, **characterized in that** the absorber membranes (6, 7) have varying weights per unit area.

6. A vehicle (3) according to any of claims 1 to 5, **characterized in that** the device (1) comprises a structure-borne noise converter (10) connected to a signal processor (9) and a microphone (11) connected to the signal processor (9), the microphone (11) preferably being arranged in the region of an end of the sound absorption element (5) facing the roadway.

7. A vehicle (3) according to claim 6, **characterized in that** the signal processor (9) is designed for delivering an audio signal received from the microphone (11) to the structure-borne noise converter (10) in a phase-shifted manner in order to generate a destructive sound interference.

8. A vehicle (3) according to any of claims 6 or 7, **characterized in that** the structure-borne noise converter (10) is arranged on a side of the first absorber membrane (6) facing away from the tire contact patch (4).

9. A vehicle (3) according to any of claims 6 or 7, **char-**

**acterized in that** the structure-borne noise converter (10) is arranged on a body part of the vehicle (3) in the area of the tire (2).

10. A vehicle (3) according to any of claims 1 to 9, **characterized in that** the sound absorption element (5) is attached to the vehicle (3) in such a way that it is displaceable in the direction of the roadway, and it comprises an aerodynamic element (12) designed for providing a downforce dependent on the airstream.

11. A vehicle (3) according to any of claims 1 to 10, **characterized in that** the device (1) comprises a positioning unit (13) connected to the sound absorption element (5), the positioning unit (13) being designed for positioning the sound absorption element (5) in an operating position in which the first absorber membrane (6) is oriented essentially normally to the direction of sound propagation emanating from the tire contact patch (4) when the vehicle's (3) driving speed increases, and for moving it out of the operating position when the driving speed decreases.

12. A vehicle (3) according to any of claims 1 to 11, **characterized in that** the first absorber membrane (6) is formed from carbon and/or kevlar and preferably has a foam core (14).

13. A vehicle (3) according to claim 2, **characterized in that** the further absorber membrane (7) is formed from carbon and/or kevlar and preferably has a foam core (14).

14. A vehicle (3) according to any of claims 1 to 13, **characterized in that** the sound absorption element (5) exhibits several resonance frequencies.

15. A vehicle (3) according to any of claims 1 to 14, **characterized in that** the sound absorption element (5) has an elastic membrane suspension (15), with each absorber membrane (6, 7) being mounted to the elastic membrane suspension (15) in an oscillatable manner.

**Revendications**

1. Véhicule (3) avec au moins un pneumatique (2) et avec un dispositif (1) de réduction d'un bruit de roulement de l'au moins un pneumatique (2), le pneumatique (2) roulant sur une bande de roulement (4) sur une chaussée, le dispositif comprenant au moins un élément d'absorption de bruit (5) avec au moins une fréquence de résonnance, fixé sur le véhicule (3) devant, derrière et/ou sur le côté de la bande de roulement (4) dans le sens de déplacement (F) du véhicule (3), et une première membrane absorbante (6) courbe orientée vers la bande de roulement (4), **caractérisé en ce que** la première membrane absorbante (6) dans sa totalité est sensiblement orientée perpendiculairement à une direction de propagation du son (S) partant de la bande de roulement (4) et que l'élément d'absorption de bruit (5) présente une distance par rapport à la bande de roulement (4) qui correspond à un multiple de la moitié d'une longueur d'onde ($\lambda$) associée à la fréquence de résonnance.

2. Véhicule (3) selon la revendication 1, **caractérisé en ce que** l'élément d'absorption de bruit (5) comprend au moins une autre membrane absorbante (7) espacée de la première membrane absorbante (6), l'autre membrane absorbante (7) étant disposée sensiblement parallèlement à la première membrane absorbante (6).

3. Véhicule (3) selon la revendication 2, **caractérisé en ce qu'**un espace (8) de l'élément d'absorption de bruit (5) défini par deux membranes absorbantes (6, 7) est fermé hermétiquement et de préférence rempli avec une mousse acoustique.

4. Véhicule (3) selon une des revendications 2 ou 3, **caractérisé en ce qu'**une distance entre la première membrane absorbante (6) et l'autre membrane absorbante (7) voisine de la première membrane absorbante (6) diffère d'une distance entre deux autres membranes absorbantes (7).

5. Véhicule (3) selon une des revendications 2 à 4, **caractérisé en ce que** les membranes absorbantes (6, 7) présentent des poids surfaciques variables.

6. Véhicule (3) selon une des revendications 1 à 5, **caractérisé en ce que** le dispositif (1) comprend un transducteur de bruit de structure (10) relié à un processeur de signaux (9) et un microphone (11) relié au processeur de signaux (9), le microphone (11) étant de préférence disposé dans la région d'une extrémité de l'élément d'absorption de bruit (5) orientée vers la chaussée.

7. Véhicule (3) selon la revendication 6, **caractérisé en ce que** le processeur de signaux (9) est configuré pour fournir au transducteur de bruit de structure (10) un signal audio déphasé reçu par le microphone (10) pour générer une interférence sonore destructive.

8. Véhicule (3) selon une des revendications 6 ou 7, **caractérisé en ce que** le transducteur de bruit de structure (10) est disposé sur une face de la première membrane absorbante (6) opposée à la bande de roulement (4).

9. Véhicule (3) selon une des revendications 6 ou 7, **caractérisé en ce que** le transducteur de bruit de structure (10) est disposé sur une pièce de carrosserie du véhicule (3) dans la région du pneumatique (2).

10. Véhicule (3) selon une des revendications 1 à 9, **caractérisé en ce que** l'élément d'absorption de bruit (5) est fixé sur le véhicule (3) de manière coulissante en direction de la chaussée et comporte un élément aérodynamique (12) qui est configuré pour générer une force de portance dépendant du vent de déplacement.

11. Véhicule (3) selon une des revendications 1 à 10, **caractérisé en ce que** le dispositif (3) comprend une unité de positionnement (13) reliée à l'élément d'absorption de bruit (5), l'unité de positionnement (13) étant configurée pour positionner l'élément d'absorption de bruit (5), lorsque la vitesse de déplacement du véhicule (3) augmente, dans une position de fonctionnement dans laquelle la première membrane absorbante (6) est orientée sensiblement perpendiculairement à la direction de propagation du son partant de la bande de roulement (4), et pour le mettre hors de la position de fonctionnement lorsque la vitesse de déplacement diminue.

12. Véhicule (3) selon une des revendications 1 à 11, **caractérisé en ce que** la première membrane absorbante (6) est faite de carbone et/ou de Kevlar et comporte de préférence un noyau en mousse (14).

13. Véhicule (3) selon la revendication 2, **caractérisé en ce que** l'autre membrane absorbante (7) est faite de carbone et/ou de Kevlar et comporte de préférence un noyau en mousse (14).

14. Véhicule (3) selon une des revendications 1 à 13, **caractérisé en ce que** l'élément d'absorption de bruit (5) présente plusieurs fréquences de résonance.

15. Véhicule (3) selon une des revendications 1 à 14, **caractérisé en ce que** l'élément d'absorption de bruit (5) présente une suspension de membranes élastique (15), chaque membrane absorbante (6, 7) étant montée de manière oscillante sur la suspension de membranes élastique (15).

Fig. 1a

Fig. 1b

Fig. 1c

Fig. 1d

Fig. 2a

Fig. 2b

Fig. 3a

Fig. 3b

Fig. 3c

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- EP 0680866 A1
- EP 0769421 A1